(19) Europäisches Patentamt
European Patent Office
Office européen des brevets

(11) Veröffentlichungsnummer: **0 043 003**
**B1**

(12) # EUROPÄISCHE PATENTSCHRIFT

(45) Veröffentlichungstag der Patentschrift: **07.09.83**

(51) Int. Cl.$^3$: **C 09 B 25/00,** C 09 B 67/26

(21) Anmeldenummer: **81104430.4**

(22) Anmeldetag: **10.06.81**

(54) **Verfahren zur Herstellung von anionischen Chinophthalonfarbstoffen.**

(30) Priorität: **19.06.80 DE 3022837**

(43) Veröffentlichungstag der Anmeldung: **06.01.82 Patentblatt 82/1**

(45) Bekanntmachung des Hinweises auf die Patenterteilung: **07.09.83 Patentblatt 83/36**

(84) Benannte Vertragsstaaten: **BE CH DE FR GB IT LI**

(56) Entgegenhaltungen:
**FR-A-2 072 483**
**FR-A-2 180 033**
**FR-A-2 276 359**

(73) Patentinhaber: **BAYER AG, Zentralbereich Patente, Marken und Lizenzen, D-5090 Leverkusen 1, Bayerwerk (DE)**

(72) Erfinder: **Brack, Alfred, Dr., Auf dem Krahwinkel 7, D-5068 Odenthal (DE)**

**EP 0 043 003 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von anionischen Chinophthalonfarbstoffen

Es ist z. B. aus den US-Patentschriften 3 152 132 und 3 301 860 bekannt, daß man anionische Chinophthalonfarbstoffe durch Kondensation von sulfogruppenhaltigen Chinaldinderivaten mit Phthalsäureanhydrid herstellen kann. Diese Kondensation gelingt jedoch nur in bestimmten Lösungsmitteln, vorzugsweise vom Typ der aliphatischen und alicyclischen Säureamide, wie Dimethylformamid, Dimethylacetamid und N-Methyl-pyrrolidon. Diese Lösungsmittel werden unter den Bedingungen der Kondensation jedoch z. T. unter Bildung toxischer Abbauprodukte, wie Kohlenmonoxid, zersetzt. Zugleich bilden sich die dem Amid zugrundeliegenden freien Amine, wie Dimethylamin, wodurch die Abluft und nach der Aufarbeitung des Kondensationsansatzes das Abwasser belastet wird. Das bei den bekannten Verfahren — z. B. nach der Arbeitsweise des Beispiels 1 aus der US-PS 3 152 132 — anfallende Abwasser enthält darüber hinaus das gesamte, unzersetzt gebliebene Lösungsmittel und das überschüssige Phthalsäureanhydrid bzw. dessen Folgeprodukte, wie Phthalsäuremonodimethylamid. Der Anfall derartig stark belasteter Abwässer, die sich nicht zur Aufarbeitung im Sinne eines »Recycling-Verfahrens« eignen, stellt einen entscheidenden Nachteil der vorbekannten Verfahren dar.

Es wurde nun gefunden, daß die Kondensation der sulfogruppenhaltigen Chinaldinderivate sehr vorteilhaft in Chinolin ausgeführt werden kann. In diesem Lösungsmittel entstehen die Chinophthalonfarbstoffe in sehr reiner Form mit vorzüglichen Ausbeuten. Das Chinolin kann aus den kristallin anfallenden Farbstoffen mit Lösungsmitteln wie Methanol, Ethanol, Isopropanol oder Aceton leicht vollständig ausgewaschen werden. Durch einfache Destillation werden die Lösungsmittel zurückgewonnen und erneut eingesetzt. Es entstehen weder toxische, gasförmige Abbauprodukte noch irgend welche Abwässer; der beim destillativen Zurückgewinnen des Chinolins hinterbleibende Rückstand kann ohne weiteres durch Verbrennen vernichtet oder auch wieder auf Phthalsäure (-derivate) aufgearbeitet werden. Damit sind alle umweltbelastenden Nachteile der vorbekannten Verfahren beseitigt.

Anionische Chinophthalonfarbstoffe können auch aus sulfiertem Phthalsäureanhydrid bzw. aus Sulfophthalsäure und sulfonsäuregruppenfreien Chinaldinderivaten hergestellt werden. Hier ist das neue Verfahren ebenso vorteilhaft einsetzbar. Schließlich können auch beide Komponenten Sulfonsäuregruppen enthalten.

Gegenstand der Erfindung ist insbesondere ein Verfahren zur Herstellung von anionischen Chinophthalonfarbstoffen der Formel

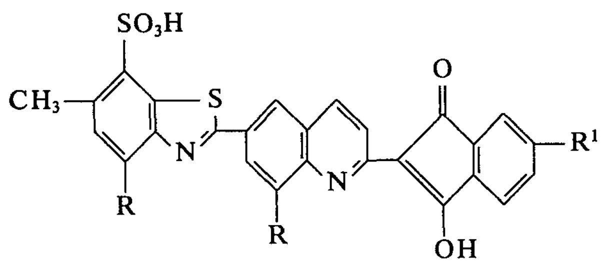

worin

R für Wasserstoff oder Methyl und
$R^1$ für Wasserstoff, die Carboxyl- oder die Sulfonsäuregruppe steht,

dadurch gekennzeichnet, daß man ein Chinaldinderivat der Formel

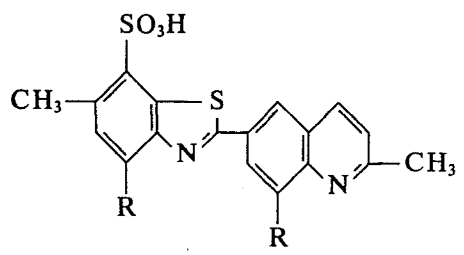

worin
R Wasserstoff oder Methyl bedeutet,

in Chinolin bei 160 – 240° C, vorzugsweise bei 180 – 220° C, mit Phthalsäureanhydrid, Trimellithsäureanhydrid oder 4-Sulfo-phthalsäureanhydrid bzw. 4-Sulfo-phthalsäure kondensiert.

Geeignete sulfonsäuregruppenhaltige Chinaldinderivate sind beispielsweise:

Chinaldin-5-, -6-, -7- und -8-sulfonsäure, die Verbindungen:

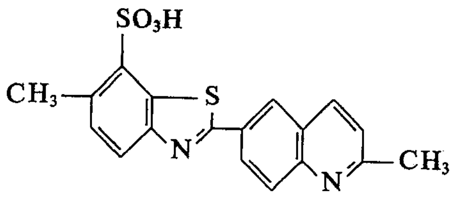

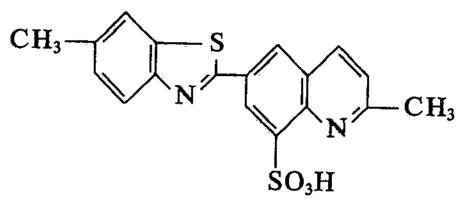

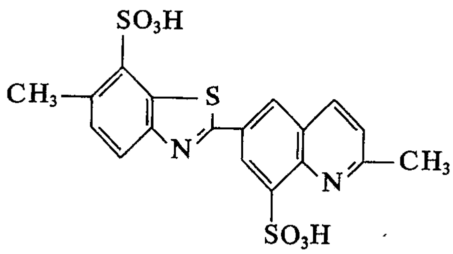

und

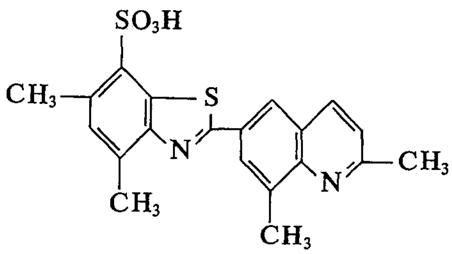

Die Kondensation wird durch Erhitzen der Komponenten auf 160–240° C, vorzugsweise 180–220° C, ausgeführt. Die so hergestellten Farbstoffe sind in wäßrigen Lösungen polyoxethylierter Amine leicht und ohne Rückstand löslich. Diese Lösungen sind kältestabil und leicht zu handhaben. Sie enthalten die entsprechenden Aminsalze der Farbstoffe und gegebenenfalls überschüssiges Amin. Besonders konzentrierte Lösungen sind herstellbar mit dem Amin der Formel

$$N(CH_2CH_2OCH_2CH_2OH)_3$$

und dessen Quartärbase der Formel

$$[HOCH_2CH_2-N(CH_2CH_2OCH_2CH_2OH)_3]^+OH^-.$$

Die in den Beispielen angegebenen Teile sind Gewichtsteile.

## Beispiel 1

328 Teile der Verbindung der Formel

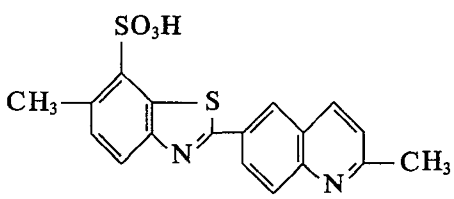

660 Teile Phthalsäureanhydrid und 1000 Teile technisches Chinolin werden unter Rühren 20 h auf 200° C erhitzt. Nach dem Abkühlen läßt man 1000 Teile Ethanol zulaufen. Man rührt bis zur Homogenisierung der Mischung und saugt ab. Der kristallin anfallende Farbstoff wird mit 1000 Teilen Alkohol gewaschen. Man erhält 529 Teile Farbstoff, der z. B. zum Färben von Papier in einem sehr klaren grünstichigen Gelbton eingesetzt werden kann. Aus dem Filtrat werden Alkohol und Chinolin durch Destillation zurückgewonnen.

Der Farbstoff ist besonders gut löslich in wäßrigen Lösungen poly-oxethylierter Amine, wie Lösungen von

$[N(CH_2CH_2OH)_4]OH$,

$N(CH_2CH_2OCH_2CH_2OH)_3$

und

$[HOCH_2CH_2-N(CH_2CH_2OCH_2CH_2OH)_3]OH$,

Man erhält eine kältestabile, flüssige Farbstoff-Formulierung, wenn man 80 Teile des wie oben hergestellten Farbstoffes in 250 Teilen Wasser und 150 Teilen des Amins der Formel

$N(CH_2CH_2OCH_2CH_2OH)_3$

löst.

Arbeitet man nach diesem Verfahrensbeispiel unter Einsatz von 345 Teilen der Verbindung der Formel

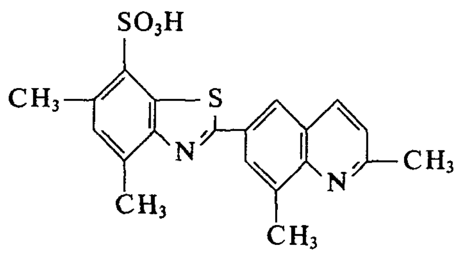

so erhält man ebenso glatt den coloristisch sehr ähnlichen Farbstoff der Formel:

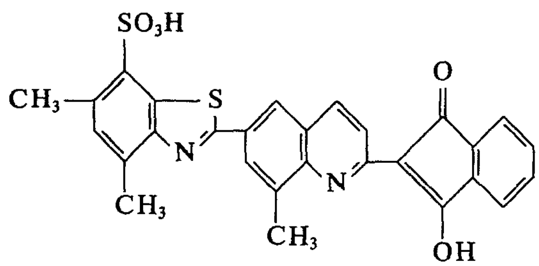

Beispiel 2

37 Teile des in Beispiel 1 verwendeten Chinaldinderivates, 40 Teile des mono-Kaliumsalzes der 4-Sulfo-phthalsäure und 150 Teile Chinolin werden 15 h auf 190°C erhitzt. Nach dem Erkalten wird der ausgeschiedene Farbstoff

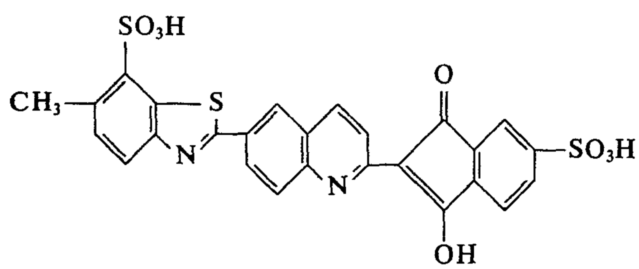

abgesaugt und mit Alkohol gewaschen. Das Rohprodukt kann durch Auskochen mit 2000 Teilen Wasser gereinigt werden. Aus dem Filtrat scheidet sich auf Zusatz von 100 Teilen konz. Salzsäure der reine Farbstoff in kristalliner Form aus. Er ergibt klare, grünstichige Gelbfärbungen auf Wolle, Polyamid und Papier und entspricht der obigen Formel.

Beispiel 3

37 Teile des in Beispiel 1 verwendeten Chinaldinderivates, 22 Teile Trimellithsäureanhydrid und 100 Teile Chinolin werden 15 h auf ca. 200°C erhitzt. Nach dem Abkühlen wird mit 120 Teilen Alkohol verdünnt. Der ausgeschiedene Farbstoff der Formel

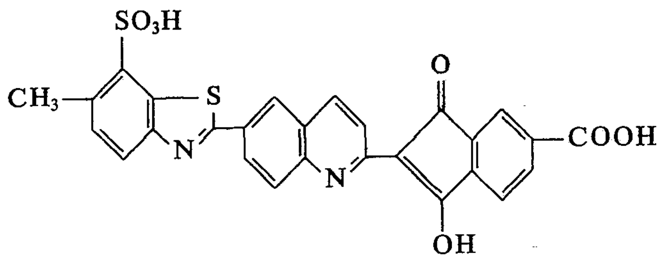

wird abgesaugt und mit 100 Teilen Alkohol gewaschen. Man erhält 50 Teile kristallinen Farbstoff, der ebenso wie das Produkt des Beispiels 1 in eine kältestabile Flüssigformulierung überführt werden kann und etwas weniger grünstichige, gelbe Färbungen liefert.

**Patentansprüche**

1. Verfahren zur Herstellung von anionischen Chinophthalonfarbstoffen durch Kondensation eines Chinaldinderivates mit gegebenenfalls kernsubstituiertem Phthalsäureanhydrid, wobei eine der Komponenten mindestens eine Sulfonsäuregruppe enthält, dadurch gekennzeichnet, daß man die Kondensation bei 160–240°C, vorzugsweise bei 180–220°C, in Chinolin ausführt.

2. Verfahren zur Herstellung von anionischen Chinophthalonfarbstoffen der Formel

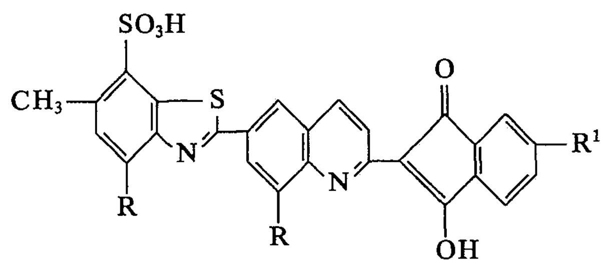

worin

R für Wasserstoff oder Methyl und
$R^1$ für Wasserstoff, die Carboxyl- oder die Sulfonsäuregruppe steht,

dadurch gekennzeichnet, daß man ein Chinaldinderivat der Formel

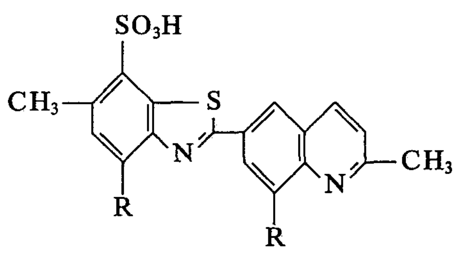

worin
R Wasserstoff oder Methyl bedeutet,

in Chinolin bei 160–240°C, vorzugsweise bei 180–220°C, mit Phthalsäureanhydrid, Trimellithsäureanhydrid oder 4-Sulfo-phthalsäureanhydrid bzw. 4-Sulfo-phthalsäure kondensiert.

3. Wäßrige Lösungen von sulfogruppenhaltigen Kondensationsprodukten eines Chinaldinderivats mit einem gegebenenfalls kernsubstituierten Phthalsäureanhydrid — hergestellt nach dem Verfahren des Anspruchs 1 —, enthaltend die Farbstoffsalze mit einem polyoxethylierten Amin oder dessen Quartärbase und gegebenenfalls überschüssiges polyoxethyliertes Amin bzw. dessen Quartärbase.

4. Wäßrige Lösungen gemäß Anspruch 3 enthaltend als Amin bzw. Quartärbase die Verbindungen

der Formel

$(HOCH_2CH_2OCH_2CH_2)_3N$

bzw.

$[HOCH_2CH_2-N(CH_2CH_2OCH_2CH_2OH)_3]^+OH^-$.

**Claims**

1. Process for the preparation of anionic quinophthalone dyestuffs by condensation of a quinaldine derivative with phthalic anhydride which is optionally substituted on the nucleus, one of the components containing at least one sulphonic acid group, characterised in that the condensation is carried out at 160–240° C, preferably at 180–220° C, in quinoline.

2. Process for the preparation of anionic quinophthalone dyestuffs of the formula

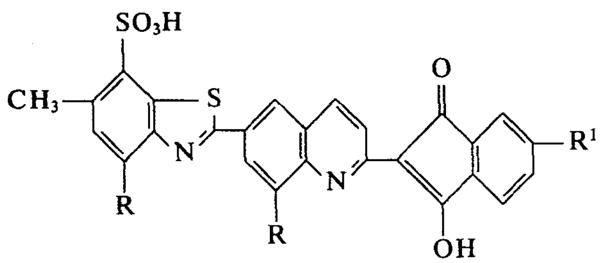

wherein

R represents hydrogen or methyl and
$R^1$ represents hydrogen or the carboxyl or sulphonic acid group,

characterised in that a quinaldine derivative of the formula

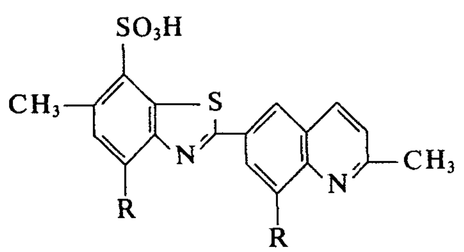

wherein
R denotes hydrogen or methyl,

is subjected to a condensation reaction with phthalic anhydride, trimellitic anhydride, or 4-sulpho-phthalic anhydride or 4-sulpho-phthalic acid in quinoline at 160–240° C, preferably at 180–220° C.

3. Aqueous solutions of condensation products, containing sulpho groups of a quinaldine derivative and a phthalic anhydride which is optionally substituted on the nucleus — produced by the process of Claim 1 —, which contain the dyestuff salts with a polyoxyethylated amine or quaternary base thereof and, if appropriate, excess polyoxyethylated amine ir quaternary base thereof.

4. Aqueous solutions according to Claim 3, which contain the compounds of the formula

$(HOCH_2CH_2OCH_2CH_2)_3N$

or

$[HOCH_2CH_2-N(CH_2CH_2OCH_2CH_2OH)_3]^+OH^-$

as the amine or quaternary base.

**Revendications**

1. Procédé de production de colorants anioniques de quinophtalones par condensation d'un dérivé de quinaldine avec de l'anhydride d'acide phtalique éventuellement substitué sur le noyau, l'un des composants contenant au moins un groupe acide sulfonique, caractérisé en ce qu'on effectue la

condensation à 160 – 240° C, de préférence à 180 – 220° C dans la quinoléine.

2. Procédé de production de colorants anioniques de quinophtalones de formule

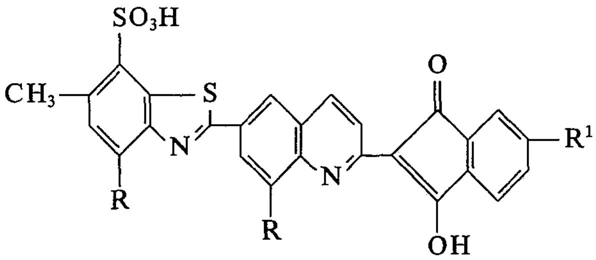

dans laquelle

R représente l'hydrogène ou le groupe méthyle et

$R^1$ est l'hydrogène, le groupe carboxyle ou le groupe acide sulfonique,

caractérisé en ce qu'on condense un dérivé de quinaldine de formule

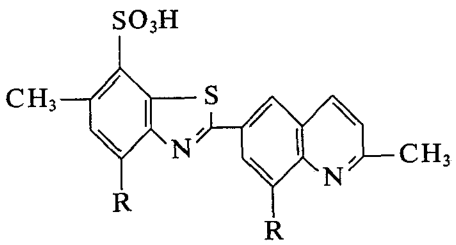

dans laquelle
R représente l'hydrogène ou le groupe méthyle

dans la quinoléine à 160 – 240° C, de préférence à 180 – 220° C, avec l'anhydride d'acide phtalique, l'anhydride d'acide trimellitique ou l'anhydride d'acide 4-sulfophtalique et l'acide 4-sulfophtalique.

3. Solutions aqueuses de produits de condensation porteurs de groupes sulfo, d'un dérivé de quinaldine avec un anhydride d'acide phtalique éventuellement substitué sur le noyau — préparées selon le procédé de la revendication 1 —, contenant les sels clorants avec une amine polyéthoxylée ou sa base quaternaire et, le cas échéant, un excès d'amine polyéthoxylée ou de sa base quaternaire.

4. Solutions aqueuses suivant la revendication 3, contenant comme amine ou base quaternaire les composés de formules

$$(HOCH_2CH_2OCH_2CH_2)_3N$$

et

$$[HOCH_2CH_2-N(CH_2CH_2OCH_2CH_2OH)_3]^+OH^-.$$